# FASCICULE DE BREVET EUROPEEN

(11) **EP 2 479 646 B1**
(45) Date de publication et mention de la délivrance du brevet: **03.10.2018**
(21) Numéro de dépôt: 12150359.3
(22) Date de dépôt: 06.01.2012
(51) Int. Cl.: G06F 3/02, H01H 13/70, H05K 7/18

(54) **Système de dialogue homme-machine**
Mensch-Maschine Dialogsystem
Human-machine dialog system

(30) Priorité: 24.01.2011 FR 1150511
(43) Date de publication de la demande: 25.07.2012
(73) Titulaire: Schneider Electric Industries SAS, 92500 Rueil-Malmaison (FR)
(72) Inventeur: Beni, Dominique, 16600 Mornac (FR); Chauvet, Francis, 16440 Mouthiers (FR); Tardivon, Alain, 16170 Gourville (FR); Lemasson, Eric, 14610 Anisy (FR)
(74) Mandataire: Dufresne, Thierry

(56) Documents cités:
- DE-A1- 10 060 981
- US-A- 5 865 546
- US-A1- 2004 114 934
- US-A1- 2005 286 213
- US-A1- 2006 050 464
- US-A1- 2006 088 335
- Bernhard Linke: "Sense multiple pushbuttons using only two wires", EDN magazine, 9 septembre 2010 (2010-09-09), XP055004435, Extrait de l'Internet: URL:http://www.edn.com/article/510416-Sens e_multiple_pushbuttons_using_only_two_wire s.php [extrait le 2011-08-09]
- D Menesplier: "Le BUS 1 WIRE", , 15 septembre 2008 (2008-09-15), XP055004437, Extrait de l'Internet: URL:http://daniel.menesplier.free.fr/Doc/B US%201%20WIRE.pdf [extrait le 2011-08-09]

## Description

La présente invention se rapporte à un système de dialogue homme-machine. L'invention concerne plus précisément un système de dialogue homme-machine qui comporte une première partie et une deuxième partie connectées entre elles.

Actuellement, un système de dialogue homme-machine est réalisé en montant individuellement chaque organe de dialogue homme-machine de type bouton-poussoir ou voyant de signalisation sur une porte d'une armoire électrique ou un pupitre de commande. Pour chaque organe de dialogue homme-machine, il est nécessaire de percer un trou et de réaliser le câblage de cet organe de dialogue homme-machine. Si un organe de dialogue homme-machine doit être remplacé, il doit être entièrement démonté et son remplaçant doit être à nouveau câblé. Le document US 5,865,546 décrit un clavier modulaire employé dans un système informatique.

Le document US 2006/050464 décrit des applications du protocole "One Wire".

Les documents US2005/286213A1, US2004/114934A1, DE10060981A1 et US2006088335A1 décrivent des systèmes de dialogue homme-machine comportant des organes de dialogue amovibles et interchangeables.

Le but de l'invention est de proposer un système de dialogue homme-machine comportant plusieurs organes de dialogue homme-machine, qui soit facile à monter et dans lequel chaque organe de dialogue homme-machine peut être facilement remplacé.

Ce but est atteint par un système de dialogue homme-machine comme défini dans la revendication 1.

Selon une particularité, le système comporte une mémoire destinée à stocker des données représentatives d'un état de l'organe de dialogue homme-machine et des moyens de traitement destinés à lire et/ou écrire dans ladite mémoire.

Selon une autre particularité, l'organe de dialogue homme-machine comporte par exemple une interface de commande actionnable par un utilisateur et coopérant avec ses moyens de traitement pour écrire des données représentatives de l'état de l'organe de dialogue homme-machine dans la mémoire.

Selon une autre particularité, l'organe de dialogue homme-machine comporte par exemple une interface de signalisation connectée au bus de communication et d'alimentation de manière à pouvoir être alimentée par l'unité d'alimentation et coopérant avec ses moyens de traitement pour afficher un état correspondant aux données stockées dans la mémoire.

Selon une autre particularité, l'organe de dialogue homme-machine comporte par exemple une interface d'identification ou de détection coopérant avec les moyens de traitement pour écrire des données représentatives de l'état de l'organe de dialogue homme-machine dans la mémoire.

Selon une autre particularité, l'organe de dialogue homme-machine comporte par exemple une interface de réception de données fonctionnant par technologie sans-fil et coopérant avec ses moyens de traitement pour écrire des données représentatives de l'état de l'organe de dialogue homme-machine dans la mémoire.

Selon une autre particularité, l'organe de dialogue homme-machine comporte par exemple une interface d'émission de données fonctionnant par technologie sans-fil et coopérant avec ses moyens de traitement pour envoyer un message correspondant aux données stockées dans la mémoire.

Selon une autre particularité, le système de dialogue homme-machine comporte deux organes de dialogue homme-machine et ces deux organes de dialogue homme-machine comportent tous les deux un boîtier identique de forme carrée.

Selon une autre particularité, la première partie et la deuxième partie sont positionnées de part et d'autre d'une paroi, constituée par exemple par la porte d'une armoire ou le plateau d'un pupitre de commande.

D'autres caractéristiques et avantages vont apparaître dans la description détaillée qui suit en se référant à un mode de réalisation donné à titre d'exemple et représenté par les dessins annexés sur lesquels :
- la figure 1 représente, vu en éclaté, le système de dialogue homme-machine de l'invention,
- la figure 2 représente le système de dialogue homme-machine de l'invention,
- la figure 3 illustre le principe d'assemblage du système de dialogue homme-machine de l'invention,
- la figure 4 représente, vu en éclaté, le support de fixation de la deuxième partie du système de dialogue homme-machine de l'invention,
- la figure 5 représente, vu assemblé, le support de fixation de la deuxième partie du système de dialogue homme-machine de l'invention,
- la figure 6 représente un organe de dialogue homme-machine doté d'une interface de commande de type bouton-poussoir adaptée pour le système de dialogue homme-machine de l'invention,
- la figure 7 représente, vu en éclaté, l'organe de dialogue homme-machine doté d'une interface de commande de type bouton-poussoir adaptée pour le système de dialogue homme-machine de l'invention,
- la figure 8 représente de manière schématique l'architecture de fonctionnement d'un organe de dialogue homme-machine doté d'une interface de commande de type bouton-poussoir,
- la figure 9 représente de manière schématique l'architecture de fonctionnement d'un organe de dialogue homme-machine doté d'une interface de signalisation de type voyant lumineux.

L'invention concerne un système de dialogue homme-machine comportant notamment une première partie 1 comportant une station 10 de lecture/écriture de données et une deuxième partie comportant plusieurs organes de dialogue homme-machine 2 dotés chacun d'une interface de dialogue homme-machine 20, de moyens de traitement 230 et par exemple d'une mémoire 231.

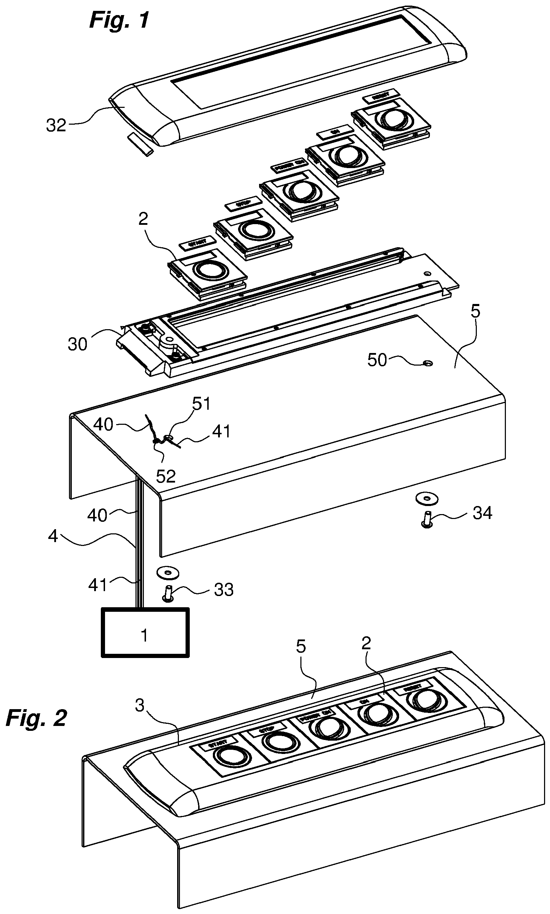

Selon l'invention, la première partie 1 comporte une station 10 de lecture/écriture de données dotée d'une unité de traitement incluant un microprocesseur et une mémoire et une unité d'alimentation 11 destinée à alimenter les organes de dialogue homme-machine 2 de la deuxième partie. La station 10 de lecture/écriture et l'unité d'alimentation 11 sont par exemple agencées à l'intérieur d'un même boîtier comportant des moyens de fixation adaptés au type d'application. La première partie 1 est montrée une seule fois sur la figure 1 mais il faut considérer qu'elle est également présente dans la même configuration sur les autres figures annexées. Selon l'invention, la mémoire de l'unité de traitement peut être partagée par tous les organes de dialogue homme-machine afin de stocker leur état ou d'autres informations affectées à l'organe de dialogue homme machine. Comme décrit ci-dessus, il est également possible d'affecter une mémoire 231 distincte à chaque organe de dialogue homme-machine. Dans la suite de la description, nous considérerons que chaque organe de dialogue homme-machine 2 possède sa propre mémoire 231. Mais la configuration globale du système permet d'imaginer que la mémoire employée est commune à tous les organes de dialogue homme-machine et correspond par exemple à la mémoire de la station de lecture/écriture ou à une ou plusieurs autres mémoires localisées dans la première ou la deuxième partie du système de dialogue homme-machine.

La première partie 1 et la deuxième partie sont connectées entre elles à l'aide d'un bus 4 de communication et d'alimentation permettant de réaliser la communication entre la station 10 de lecture/écriture et chaque organe de dialogue homme-machine 2 et l'alimentation entre l'unité d'alimentation 11 et les organes de dialogue homme-machine 2. Ce bus 4 de communication et d'alimentation est par exemple réalisé sur deux lignes conductrices distinctes, une première ligne conductrice 40 connectée à un potentiel électrique non nul et permettant de laisser passer à la fois le courant d'alimentation des organes de dialogue homme-machine 2 et les trames de communication échangées entre la station 10 de lecture/écriture et les organes de dialogue homme-machine 2, et une deuxième ligne conductrice 41 à potentiel électrique neutre.

La station 10 de lecture-écriture et les différents organes de dialogue homme-machine 2 échangent des données sur le bus 4 de communication et d'alimentation en employant un protocole de communication simple. Ce protocole de communication est par exemple un protocole à deux fils permettant de faire passer à la fois l'alimentation des organes de dialogue homme-machine et les trames de communication échangées entre chaque organe de dialogue homme-machine 2 et la station 10 de lecture/écriture. Un protocole de ce type déjà connu est celui dénommé "OneWire" (appelé également protocole DALLAS) décrit à l'adresse suivante : http://daniel.menesplier.free.fr/Doc/BUS%201%20WIRE.pdf

Selon l'invention, quelle que soit leur fonction, les organes de dialogue homme-machine 2 comportent tous un boîtier de forme identique, leur permettant d'être interchangeables.

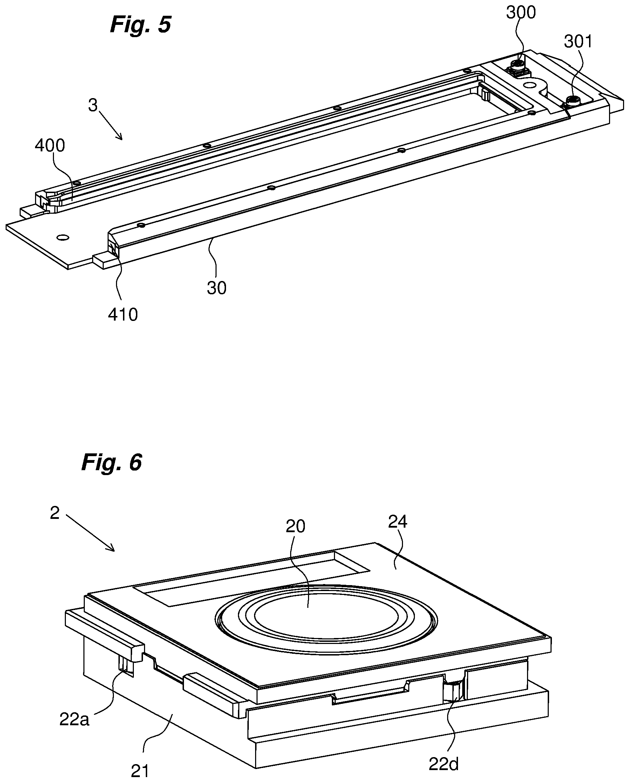

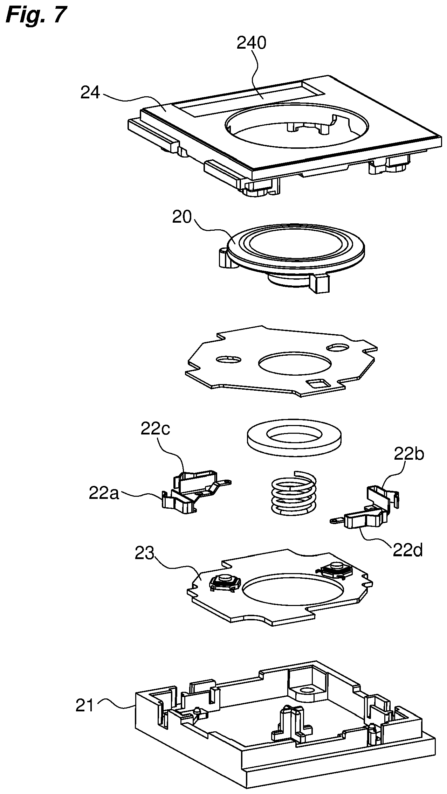

Selon l'invention, un organe de dialogue homme-machine 2 tel qu'employé dans le système de l'invention se compose d'un boîtier 21 de forme carrée, en matière plastique par exemple, d'au moins deux contacts électriques 22a, 22b réalisés sur l'extérieur du boîtier 21, d'un circuit imprimé 23 monté à l'intérieur du boîtier et d'une façade 24 refermant le boîtier et accueillant une interface de dialogue homme-machine telle que par exemple une interface de commande 20 de type bouton-poussoir (figures 6 et 7). Les deux contacts électriques 22a, 22b sont réalisés sur au moins deux côtés opposés du boîtier. Préférentiellement, deux autres contacts électriques 22c, 22d sont aussi réalisés sur les deux autres côtés opposés du boîtier. De cette manière, chaque organe de dialogue homme-machine 2 comporte deux interfaces de connexion distinctes lui permettant de pouvoir prendre deux orientations distinctes décalées de 90° entre elles. Par ailleurs, la façade 24 comporte un emplacement 240 destiné à recevoir une étiquette.

Un organe de dialogue homme-machine 2 comporte des moyens de traitement 230, tels qu'un microprocesseur et une mémoire 231 destinée à stocker des données représentatives d'un état de l'organe de dialogue homme-machine ou représentatives d'un message reçu ou à envoyer par l'organe de dialogue homme-machine 2. Les moyens de traitement 230 et la mémoire 231 sont assemblés sur le circuit imprimé 23 et connectés aux contacts électriques 22a-22d réalisés sur le boîtier 21 et sont tous deux destinés à être alimentés par l'unité d'alimentation 11 via le bus 4 de communication et d'alimentation.

La mémoire 231 de l'organe de dialogue homme-machine 2 est à titre indicatif une mémoire de technologie RAM, EEPROM ou FERAM et stocke notamment un identifiant unique permettant d'identifier l'organe de dialogue homme-machine sur le réseau de communication créé entre la station 10 de lecture/écriture et les organes de dialogue homme-machine et des données représentatives de l'état de l'organe de dialogue homme-machine 2 auquel la mémoire est associée. La mémoire 231 peut également stocker des données relatives au type d'interface de dialogue homme-machine 20.

Selon l'invention, par interface de dialogue homme-machine 20, on entend toute interface de commande actionnable manuellement ou par un élément externe et actionnable directement ou à distance par liaison filaire ou sans-fil. Cela inclut donc par exemple les différents types de boutons tels que bouton poussoir, bouton tournant à au moins deux positions mais aussi les capteurs de position, d'autres types d'interfaces de commande tels que les écrans tactiles ou les interfaces de réception de données par technologie sans-fil (radio, infrarouge...) commandées à distance par un dispositif de commande sans fil.

Par interface de dialogue homme-machine 20, on entend également toute interface de signalisation visuelle ou sonore, couplée ou non à une interface de commande. Cela inclut donc par exemple les voyants lumineux, les étiquettes lumineuses ou les écrans d'affichage, de même que tous les avertisseurs sonores. L'interface de signalisation peut également être composée d'une interface d'émission de données par technologie sans-fil permettant d'envoyer un message à un récepteur distant.

Par interface de dialogue homme-machine 20, on entend également toute interface de détection ou d'identification couplée ou non à une interface de signalisation ou à une interface de commande telle que définie ci-dessus. Cela inclut donc par exemple tout capteur de présence de type capacitif, inductif ou résistif de même que tout capteur de type biométrique permettant d'identifier une personne.

Dans la suite de la description, il faut comprendre que l'organe de dialogue homme-machine 2 peut comporter lui-même plusieurs interfaces de dialogue homme-machine 20 différentes telles que décrites ci-dessus. Ainsi, un même organe de dialogue homme-machine 2 pourra comporter à la fois une interface de commande telle que par exemple un bouton poussoir et une interface de signalisation telle que par exemple un voyant lumineux.

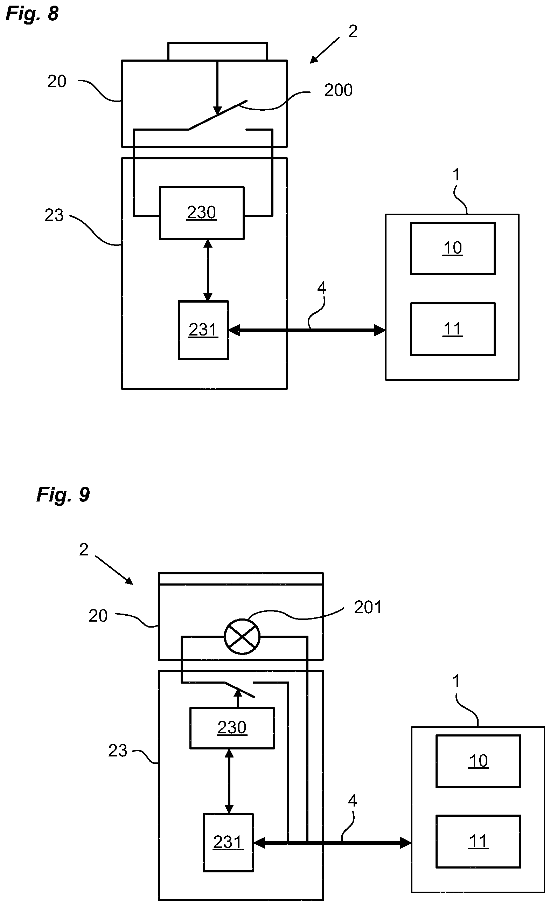

Selon le type d'interface de dialogue homme-machine 20 employé, la configuration de l'organe de dialogue homme-machine 2 peut varier. En effet, en référence à la figure 8, une interface de dialogue homme-machine 20 de type bouton poussoir comporte par exemple un contact 200 dont l'état est surveillé en permanence par les moyens de traitement 230 de l'organe de dialogue homme-machine. Lorsque ce contact 200 change d'état, les moyens de traitement 230 écrivent des données représentatives de cet état dans la mémoire interne 231. La station de lecture/écriture 10 qui scrute à intervalles réguliers la mémoire 231 peut alors être informée du changement d'état de l'interface de dialogue homme-machine 20.

En référence à la figure 9, une interface de dialogue homme-machine 20 de type voyant lumineux comporte par exemple une diode électroluminescente 201 susceptible d'être alimentée par l'unité d'alimentation 11. Lorsque la station 10 commande l'allumage du voyant, elle écrit dans la mémoire 231 interne de l'organe de dialogue homme-machine 2 des données représentatives de l'état qu'elle souhaite donner au voyant lumineux, par exemple des données représentatives de l'état "allumé" du voyant. Les moyens de traitement 230 de l'organe de dialogue homme-machine qui lisent la mémoire 231 détectent le changement d'état et commandent l'actionnement d'un contact pour connecter la diode 201 à l'unité d'alimentation 11 via le bus de communication et d'alimentation 4.

Selon l'invention, comme la mémoire 231 incluse dans chaque organe de dialogue homme-machine est optionnelle, il faut comprendre que les informations à mémoriser peuvent être stockées dans une autre mémoire, par exemple commune à tous les organes de dialogue homme-machine et localisée dans la première ou la deuxième partie du système de dialogue homme-machine.

Selon l'invention, la deuxième partie du système comporte un support de fixation 3 capable d'accueillir de manière amovible et interchangeable un ou plusieurs organes de dialogue homme-machine 2 du type décrit ci-dessus. Le support de fixation 3 comporte deux rails conducteurs 400, 410 parallèles prolongeant les deux lignes conductrices 40, 41 et sur lesquelles peut venir se connecter chaque organe de dialogue homme-machine 2 par l'intermédiaire de ses contacts électriques 22a-22d. Le bus 4 de communication et d'alimentation est donc composé des deux lignes conductrices 40, 41 s'étendant entre la première partie 1 et la deuxième partie et des deux rails conducteurs 400, 410 du support de fixation 3.

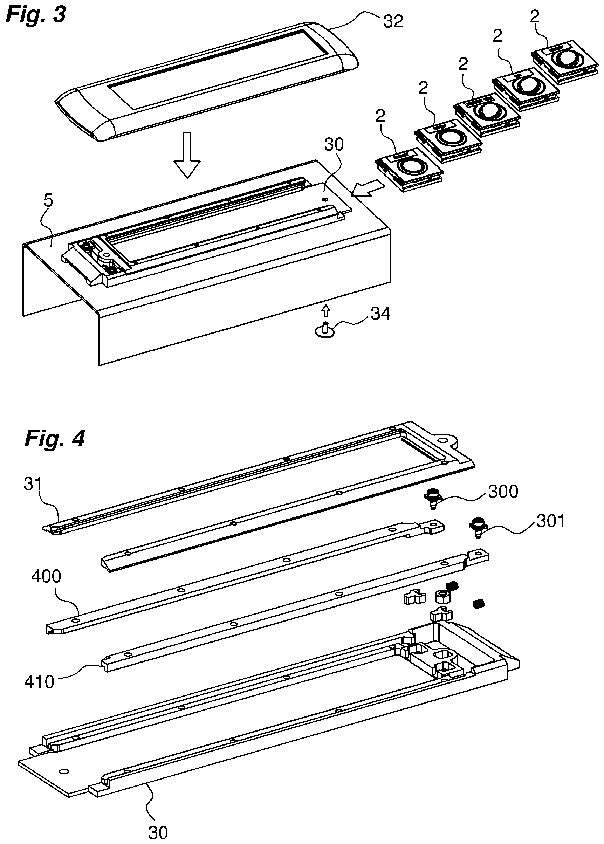

En référence aux figures 4 et 5, ce support de fixation 3 comporte également un socle 30 ou plaquette de forme allongée comportant une première extrémité comportant deux bornes électriques 300, 301 connectées chacune à un rail conducteur 400, 410 fixé sur le socle 30 et s'étendant dans le sens longitudinal, et un élément de couverture 31 fixé sur le socle 30 et formant deux glissières parallèles sur lesquelles peuvent venir s'enfiler l'un après l'autre, par coulissement, les organes de dialogue homme-machine 2 par une deuxième extrémité ouverte du socle 30. Un support de fixation 3 tel que représenté sur les figures annexées peut par exemple accueillir cinq organes de dialogue homme-machine 2. Le support de fixation 3 comporte également une plaque d'habillage 32 (non représentée sur la figure 5 mais visible sur la figure 3) se superposant au socle 30 et permettant de fixer les organes de dialogue homme-machine 2 dans le support de fixation 3 en refermant la deuxième extrémité du socle 30. Cette plaque d'habillage 32 est agencée sur le socle 30 de manière à recouvrir les rails conducteurs, permettant ainsi d'éviter tout contact avec des parties conductrices.

A partir des différents éléments décrits ci-dessus, l'invention consiste donc à réaliser un système de dialogue homme-machine en connectant la première partie 1 à la deuxième partie avec le bus de communication et d'alimentation 4. L'invention s'applique notamment aux systèmes de dialogue homme-machine qui peuvent être positionnés sur la porte d'une armoire ou sur un pupitre de commande. Le système de l'invention peut ainsi remplacer des boutons ou voyants montés chacun individuellement sur la porte de l'armoire ou sur le pupitre de commande. Sur les figures annexées, la porte de l'armoire ou le pupitre de commande sont représentés sous la forme d'une simple paroi 5.

Selon l'invention, la première partie 1 formée par la station 10 et l'unité d'alimentation 11 est ainsi disposée à l'intérieur de l'armoire, en étant par exemple fixée sur un rail DIN, ou sous le pupitre de commande, et la deuxième partie comportant le support de fixation 3 et les organes de dialogue homme-machine 2 est fixée sur l'extérieur de la paroi 5 formée par la porte de l'armoire ou le pupitre de commande.

En référence aux figures 1, 3 et 4, le support de fixation 3 comporte par exemple deux organes de fixation, par exemple deux vis 33, 34. Chaque vis 33, 34 est destinée à traverser un orifice 50, 51 réalisé à travers la paroi 5. Un autre orifice 52 doit également être réalisé à travers la paroi 5 pour laisser passer les deux lignes conductrices 40, 41 du bus de communication et d'alimentation 4 connectées d'une part aux deux bornes 300, 301 du support de fixation 3 et d'autre part à la station 10 de lecture/écriture et à l'unité d'alimentation 11. Selon l'invention, il suffit de trois orifices 50, 51, 52 de faible diamètre pour fixer le support de fixation 3 à travers la paroi 5 et le connecter à la station 10 de lecture/écriture et à l'unité d'alimentation 11, le support 3 pouvant accueillir lui-même plusieurs organes de dialogue homme-machine 2. Cette configuration de l'invention présente donc notamment l'avantage de minimiser le nombre d'orifices à percer à travers la paroi 5. Comme les organes de dialogue homme-machine 2 comportent deux interfaces de connexion distinctes, décalées de 90°, le support de fixation 3 peut être fixé horizontalement ou verticalement sur la paroi 5. D'autres moyens de fixation du support de fixation peuvent être envisagés, employant par exemple une partie autocollante ou une partie aimantée réalisée sous le support de fixation 3.

Lors de la mise en service du système de dialogue homme-machine, l'identifiant unique de chaque organe de dialogue homme-machine 2 est appris par la station 10 de lecture/écriture lors d'une étape préalable d'apprentissage et est associé dans la mémoire de la station 10 de lecture/écriture au type d'interface de dialogue homme-machine 20 de l'organe de dialogue homme-machine 2. La station 10 configure ensuite ses entrées-sorties en fonction du type d'interface de dialogue homme-machine 20 à adresser.

Le système de l'invention présente donc un certain nombre d'avantages dont certains sont listés ci-dessous :
- Réduction du nombre de trous à percer à travers la paroi,
- Possibilité de configurer le système, même après la fixation du support,
- Possibilité de modifier le système à tout moment en enlevant, en ajoutant ou en échangeant des organes de dialogue homme-machine,
- Limitation du câblage car il n'est plus nécessaire de câbler individuellement chaque organe de dialogue homme-machine,
- Possibilité d'intégrer le système à un réseau en connectant directement la station sur le réseau,
- Modularité du système et richesse des fonctions proposées,
- Compacité du système notamment en profondeur par rapport à des solutions classiques...

Il est bien entendu que l'on peut, sans sortir du cadre de la description, imaginer d'autres variantes et perfectionnements de détail et même envisager l'emploi de moyens équivalents, l'invention étant définie par les revendications.

## Revendications

1. Système de dialogue homme-machine comportant :
- une première partie (1) incluant une unité de traitement de données et une unité d'alimentation électrique (11),
- une deuxième partie comportant plusieurs organes de dialogue homme-machine (2) dotés chacun d'une interface de dialogue homme-machine (20) et un support de fixation (3) agencé pour accueillir chaque organe de dialogue homme-machine (2) de manière amovible et interchangeable,
- au moins deux organes de dialogue homme-machine étant dotés chacun d'une interface de dialogue homme-machine différente,,
- un bus (4) de communication et d'alimentation reliant l'unité d'alimentation (11) et l'unité de traitement de la première partie (1) à chaque organe de dialogue homme-machine (2), ledit bus (4) de communication et d'alimentation comportant deux rails conducteurs (400, 410) parallèles, dits premier rail et deuxième rail, agencés dans le support de fixation (3) pour connecter chaque organe de dialogue homme-machine (2),
- **Caractérisé en ce que** :
- le premier rail conducteur (400) est à potentiel électrique non nul et le deuxième rail conducteur (410) est à potentiel électrique neutre et sont agencés tous deux le long du support de fixation (3),
- le support de fixation (3) comporte un socle (30) allongé agencé pour recevoir par coulissement plusieurs organes de dialogue homme-machine (2) et sur lequel sont fixés lesdits rails conducteurs (400, 410).

2. Système selon la revendication 1, **caractérisé en ce qu'**il comporte une mémoire (231) destinée à stocker des données représentatives d'un état de l'organe de dialogue homme-machine (2) et des moyens de traitement (230) destinés à lire et/ou écrire dans ladite mémoire (231).

3. Système selon la revendication 2, **caractérisé en ce que** l'organe de dialogue homme-machine (2) comporte une interface de commande actionnable par un utilisateur et coopérant avec ses moyens de traitement (230) pour écrire des données représentatives de l'état de l'organe de dialogue homme-machine (2) dans la mémoire (231).

4. Système selon la revendication 2, **caractérisé en ce que** l'organe de dialogue homme-machine (2) comporte une interface de signalisation connectée au bus (4) de communication et d'alimentation de manière à pouvoir être alimentée par l'unité d'alimentation (11) et coopérant avec ses moyens de traitement (230) pour afficher un état correspondant aux données stockées dans la mémoire (231).

5. Système selon la revendication 2, **caractérisé en ce que** l'organe de dialogue homme-machine (2) comporte une interface d'identification ou de détection coopérant avec les moyens de traitement (230) pour écrire des données représentatives de l'état de l'organe de dialogue homme-machine (2) dans la mémoire (231).

6. Système selon la revendication 2, **caractérisé en ce que** l'organe de dialogue homme-machine (2) comporte une interface de réception de données fonctionnant par technologie sans-fil et coopérant avec ses moyens de traitement (230) pour écrire des données représentatives de l'état de l'organe de dialogue homme-machine (2) dans la mémoire (231).

7. Système selon la revendication 2, **caractérisé en ce que** l'organe de dialogue homme-machine (2) comporte une interface d'émission de données fonctionnant par technologie sans-fil et coopérant avec ses moyens de traitement (230) pour envoyer un message correspondant aux données stockées dans la mémoire (231).

8. Système selon l'une des revendications 1 à 7, **caractérisé en ce que** les deux organes de dialogue homme-machine comportent tous les deux un boîtier de forme carrée.

9. Système selon l'une des revendications 1 à 8, **caractérisé en ce que** la première partie (1) et la deuxième partie sont positionnées de part et d'autre d'une paroi (5).

## Patentansprüche

1. Mensch-Maschine-Dialogsystem, umfassend:
- einen ersten Teil (1), umfassend eine Datenverarbeitungseinheit und eine Stromversorgungseinheit (11),
- einen zweiten Teil, umfassend mehrere jeweils mit einer Mensch-Maschine-Dialogschnittstelle (20) ausgestattete Mensch-Maschine-Dialogorgane (2) und eine zum Aufnehmen von jedem Mensch-Maschine-Dialogorgan (2) auf abnehmbare und austauschbare Weise ausgebildete Befestigungshalterung (3),
- wenigstens zwei jeweils mit einer unterschiedlichen Mensch-Maschine-Dialogschnittstelle (20) ausgestattete Mensch-Maschine-Dialogorgane,
- einen Kommunikations- und Versorgungsbus (4) zum Verbinden der Versorgungseinheit (11) und der Verarbeitungseinheit des ersten Teils (1) mit jedem Mensch-Maschine-Dialogorgan (2), wobei der Kommunikations- und Versorgungsbus (4) zwei in der Befestigungshalterung (3) angeordnete parallele Stromschienen (400, 410), als erste Schiene und zweite Schiene bezeichnet, zum Verbinden von jedem Mensch-Maschine-Dialogorgan (2) umfasst,
- **dadurch gekennzeichnet, dass**:
- die erste Stromschiene (400) ein elektrisches Potential ungleich Null aufweist und die zweite Stromschiene (410) ein neutrales elektrisches Potential aufweist und beide entlang der Befestigungshalterung (3) angeordnet sind,
- die Befestigungshalterung (3) einen zum Aufnehmen von mehreren Mensch-Maschine-Dialogorganen (2) durch Schieben ausgebildeten länglichen Sockel (30) umfasst, auf dem die Stromschienen (400, 410) befestigt sind.

2. System nach Anspruch 1, **dadurch gekennzeichnet, dass** es einen zum Speichern der für einen Zustand des Mensch-Maschine-Dialogorgans (2) repräsentativen Daten ausgebildeten Speicher (231) und zum Lesen und/oder Schreiben im / in den Speicher (231) ausgebildete Verarbeitungsmittel (230) umfasst.

3. System nach Anspruch 2, **dadurch gekennzeichnet, dass** das Mensch-Maschine-Dialogorgan (2) eine von einem Benutzer zu betätigende und zum Zusammenwirken mit den Verarbeitungsmitteln (230) ausgebildete Befehlsschnittstelle zum Schreiben der für den Zustand des Mensch-Maschine-Dialogorgans (2) repräsentativen Daten in den Speicher (231) umfasst.

4. System nach Anspruch 2, **dadurch gekennzeichnet, dass** das Mensch-Maschine-Dialogorgan (2) eine mit dem Kommunikations- und Versorgungsbus (4) verbundene zur Versorgung durch die Versorgungseinheit (11) ausgebildete und mit den Verarbeitungsmitteln (230) zusammenwirkende Signalisierungsschnittstelle zum Anzeigen eines Zustands entsprechend den im Speicher (231) gespeicherten Daten umfasst.

5. System nach Anspruch 2, **dadurch gekennzeichnet, dass** das Mensch-Maschine-Dialogorgan (2) eine mit den Verarbeitungsmitteln (230) zusammenwirkende Identifikations- oder Erfassungsschnittstelle zum Schreiben der für den Zustand des Mensch-Maschine-Dialogorgans (2) repräsentativen Daten in den Speicher (231) umfasst.

6. System nach Anspruch 2, **dadurch gekennzeichnet, dass** das Mensch-Maschine-Dialogorgan (2) eine mit Drahtlostechnologie funktionierende und mit den Verarbeitungsmitteln (230) zusammenwirkende Datenempfangsschnittstelle zum Schreiben der für den Zustand des Mensch-Maschine-Dialogorgans (2) in den Speicher (231) umfasst.

7. System nach Anspruch 2, **dadurch gekennzeichnet, dass** das Mensch-Maschine-Dialogorgan (2) eine mit Drahtlostechnologie funktionierende und mit den Verarbeitungsmitteln (230) zusammenwirkende Datensendeschnittstelle zum Senden einer Meldung entsprechend den im Speicher (231) gespeicherten Daten umfasst.

8. System nach einem der Ansprüche 1 bis 7, **dadurch gekennzeichnet, dass** die zwei Mensch-Maschine-Dialogorgane beide ein viereckiges Gehäuse umfassen.

9. System nach einem der Ansprüche 1 bis 8, **dadurch gekennzeichnet, dass** der erste Teil (1) und der zweite Teil an beiden Seiten einer Wand (5) angeordnet sind.

## Claims

1. Human-machine dialog system comprising:
- a first part (1) including a data processing unit and an electrical power supply unit (11),
- a second part comprising a number of human-machine dialog members (2) each provided with a human-machine dialog interface (20) and a fastening support (3) arranged to accommodate each human-machine dialog member (2) in a removable and interchangeable manner,
- at least two human-machine dialog members each provided with a distinct human-machine dialog interface (20),
- a communication and power supply bus (4) linking the power supply unit (11) and the processing unit of the first part (1) to each human-machine dialog member (2), said communication and power supply bus (4) comprising two parallel conductive rails (400, 410), called first rail and second rail, arranged in the fastening support (3) to connect each human-machine dialog member (2),
- **characterized in that**:
- the first conductive rail (400) is with non-zero electrical potential and the second conductive rail (410) is with neutral electrical potential, and both are arranged along the fastening support (3),
- the fastening support (3) comprises an elongate base (30) arranged to receive, by sliding, a number of human-machine dialog members (2) and to which are fastened said conductive rails (400, 410).

2. System according to Claim 1, **characterized in that** it comprises a memory (231) intended to store data representative of a state of the human-machine dialog member (2) and processing means (230) intended to read and/or write to said memory (231).

3. System according to Claim 2, **characterized in that** the human-machine dialog member (2) comprises a control interface that can be actuated by a user and that cooperates with its processing means (230) to write data representative of the state of the human-machine dialog member (2) to the memory (231).

4. System according to Claim 2, **characterized in that** the human-machine dialog member (2) comprises a signalling interface connected to the communication and power supply bus (4) so as to be able to be powered by the power supply unit (11) and that cooperates with its processing means (230) to display a state corresponding to the data stored in the memory (231).

5. System according to Claim 2, **characterized in that** the human-machine dialog member (2) comprises an identification or detection interface that cooperates with the processing means (230) to write data representative of the state of the human-machine dialog member (2) to the memory (231).

6. System according to Claim 2, **characterized in that** the human-machine dialog member (2) comprises a data reception interface that operates by wireless technology and that cooperates with its processing means (230) to write data representative of the state of the human-machine dialog member (2) to the memory (231).

7. System according to Claim 2, **characterized in that** the human-machine dialog member (2) comprises a data transmission interface that operates by wireless technology and that cooperates with its processing means (230) to send a message corresponding to the data stored in the memory (231).

8. System according to one of Claims 1 to 7, **characterized in that** the two human-machine dialog members both comprise a square-shaped housing.

9. System according to one of Claims 1 to 8, **characterized in that** the first part (1) and the second part are positioned on either side of a wall (5).
